# EUROPEAN PATENT SPECIFICATION

(11) **EP 1 741 662 B1**
(45) Date of publication and mention of the grant of the patent: **01.08.2012**
(21) Application number: 06115973.7
(22) Date of filing: 23.06.2006
(51) Int. Cl.: B66C 13/12, H02G 9/04

(54) **Trench duct for a crane cable**
Bodenkanal für Kabel eines Kranes
Tranchée pour cable d'une grue

(30) Priority: 06.07.2005 IT MI20051274
(43) Date of publication of application: 10.01.2007
(73) Proprietor: RIMA S.r.l., 34143 Trieste (IT)
(72) Inventor: PAGANI, Claudio, 20020, ARESE (Milan) (IT)
(74) Representative: Coletti, Raimondo

(56) References cited:
- DE-B- 1 226 389
- DE-B1- 2 044 612
- JP-A- 52 151 883
- US-A- 5 556 680
- PATENT ABSTRACTS OF JAPAN vol. 2003, no. 12, 5 December 2003 (2003-12-05) & JP 2004 010183 A (OBE MACHINERY & ENGINEERING CO LTD), 15 January 2004 (2004-01-15)

## Description

The present invention concerns a trench duct for housing a cable and in particular a power supply cable of a mobile means parallel to the trench duct and the relative lifting device (cable-guide trolley).

In ports many cranes are supplied with power through an electric cable. To avoid such a cable being squashed and thus damaged by the means for transit on the docks, it is housed in a protective trench duct formed under the transit plane or walkway of the docks.

The trench duct and therefore the cable lie parallel to the path of the relative crane.

According to the direction of translation of the crane, the cable is picked up from the trench duct through a cable-winding roller arranged on the crane itself or else it is laid down in the trench duct through the unwinding of the same cable-winding roller. In both cases, the portion of the cable that is on the point of being laid down or picked up from the trench duct is supported by a cable-guide trolley that has the task of reducing the mechanical stresses upon the cable itself and therefore the relative wear to the minimum.

Up to now, different types of trench duct have been foreseen that nevertheless do not fully solve the problems of these systems.

JP2004010183 discloses a trench duct for housing at least one cable under the transit plane comprising a trench having two walls, a base, and on top a closing strip.

US5556680 discloses a trench duct according to the preamble of claim 1 and relates to a cover belt for a duct, made of a flexibly deformable material with metallic reinforcements, wherein the cover belt can be swung up from a closed position by a deflecting device and then falls back into its closed position behind this same deflecting device.

For example, a trench duct that is open on top has been provided that has the advantage of being cost-effective and that allows the cable to be picked up and laid down at generally high speeds, therefore without affecting the speed of translation of the crane.

However, experience has demonstrated that any object that sits upon the port docks (for example coal, crushed stone or other) can easily end up in the trench duct progressively filling it and damaging the cable. Moreover, one cannot rule out the possibility of accidental contact between the cable (that can even be medium-voltage) and a person who introduces their foot or an object that they are holding, with the danger of electrocution.

To avoid such drawbacks a trench duct has been proposed that is closed on top by hinged metal plates.

It ensures the maximum protection of the cable and the maximum safety for people and vehicles (even heavy vehicles) that are operating vertically above the cable. Nevertheless, such a type of trench duct tends to be complex and expensive. The mechanics and the weight of the plates do not allow the cable-guide trolley (which must lift and replace the plates after lifting) to travel at speeds of more than 70 m/min. Consequently, the speed of the crane is also limited.

To avoid the drawbacks of the trench ducts mentioned previously it has been thought of to make a trench duct that is closed on top by a sheet of rubber operating above the walkway and fixed to the ground along one side.

When it is closed it prevents any foreign bodies from penetrating inside the trench duct and any accidental contact with the cable. The rubber plate that closes it on top, being flexible and light, does not substantially limit the speed of movement of the cable-guide trolley that lifts it and lays it back down.

Moreover, the absence of hinges replaced by simple attachment points to the ground means that this type of trench duct does not need maintenance. The sheet of rubber that covers the trench duct has unfortunately proven easily damaged by lorries that when manoeuvring steer and/or brake the wheels right on top of it. Moreover the substantial weight of the band hinders operation at high speeds and is a determinant factor for a high cost.

Therefore, the purpose of the present invention is to solve the problems of the prior art, providing a trench duct that is structured so as to prevent foreign bodies from penetrating inside of it.

Another purpose of the present invention is to provide a trench duct that has a simple structure, with low maintenance and costs and that does not substantially limit the speed of movement of the cable-guide trolley.

Another purpose of the present invention is to provide a trench duct that cannot be damaged by heavy vehicles, even in the case in which they manoeuvre by steering and/or braking the wheels right on top of it.

Finally, a further purpose of the present invention is to provide a trench duct that can also be validly used over substantial lengths.

These and other purposes according to the present invention are accomplished by making a trench duct as outlined in claim 1.

Further characteristics of the device are the object of the dependent claims.

The characteristics and the advantages of a trench duct according to the present invention shall become clearer from the following description, given as a non-limiting example, referring to the attached schematic drawings, in which:
- figure 1A is a section view of a first embodiment of the trench duct according to the present invention with steel strip;
- figure 1B is a section view of the embodiment of the trench duct illustrated in figure 1A with a wheel that crosses the trench duct;
- figure 2 is a section view of a second embodiment of the trench duct according to the present invention with rubber strip and reinforcement cloth;
- figure 3 is a section view of a third embodiment of the trench duct according to the present invention also in this case equipped with rubber strip and reinforcement cloth;
- figures 4A and 4B are section views of a fourth embodiment of the trench duct according to the present invention with rubber strip and reinforcement cloth and without steel plate coating for the walls and the bottom of the trench;
- figure 5 is a section view of a fifth embodiment of the trench duct according to the present invention with rubber strip and reinforcement cloth and without the protective and support portion and without the steel plate coating for the walls and the bottom of the trench;
- figure 6 is a side elevation view of the cable-guide trolley suitable for laying down or removing a cable from the trench duct according to the present invention;
- figure 7 is a section view according to the line III-III of figure 6 of the cable-guide trolley; and
- figure 8 is an enlarged detail of the cable-guide trolley of figure 7.

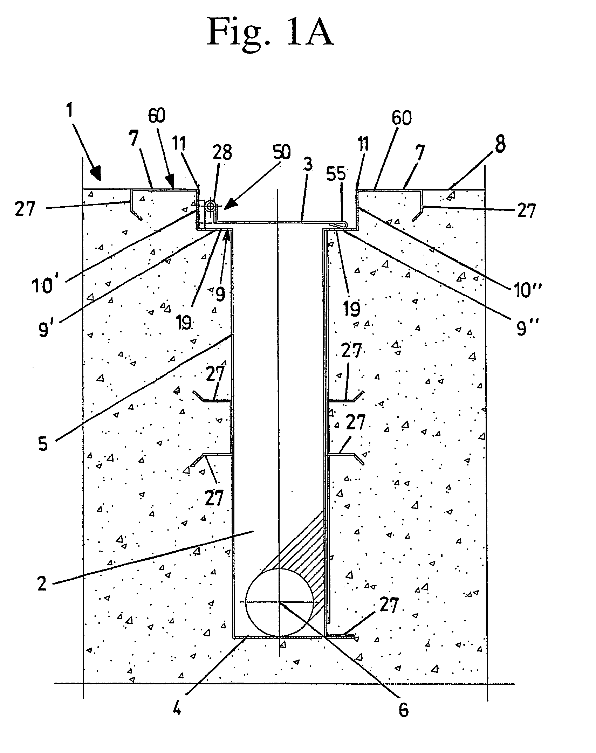

With particular reference to figure 1A, the trench duct according to the present invention generically indicated with 1 is formed from a trench 2 closed on top by a strip of flexible material 3. The trench 2 has a base wall 4, and two side walls 5 that are preferably arranged so as to give the trench 2 a rectangular section, which is the easiest form to make.

Advantageously, according to the present invention, the strip of flexible material 3 lies on a support plane 9 parallel to the transit plane 8, arranged at a lower height than the plane 8.

The strip 3 that preferably extends for the entire length of the trench 2 also comprises firm attachment means 50 to the trench 2.

According to a first embodiment, illustrated in figure 1A, the strip 3 is made from normal or stainless steel.

In this case, as better shown in figure 1A, the firm attachment means 50 are represented by a hinge-type system that fixes the strip itself to the ground at one of the two longitudinal sides.

The free longitudinal side of the strip 3, again as shown in figure 1A, can foresee a bend 55.

The trench 2, at the top edge of the side walls 5, comprises a first pair of support surfaces 9', 9" and a second pair of support surfaces 10', 10''.

The support surfaces 9', 9", forming the support plane 9 for the strip 3, are opposite, coplanar and parallel to the transit plane or walkway 8.

The opposite longitudinal edges of the strip of flexible material 3 rest on them by gravity, said strip resulting therefore placed parallel and below to the transit plane or walkway 8 of the dock with respect to which the trench duct is housed.

A second pair of support surfaces 10', 10'' is perpendicular to that of the first pair 9', 9'' and acts to laterally contain the flexible strip 3.

The trench duct 1 also has at least one protective and support portion 60 arranged at the top edge of the trench duct 1.

In detail, the protective and support portion 60 is represented by a shaped sheet of steel arranged at each top edge of the trench duct.

The sheet of steel is shaped to adapt to the surfaces 9', 9"; 10', 10'', to the top end portions of the walls 5 and to the portions of walkway directly adjacent to the edges 11 of the trench 2.

The sheet of steel, as can be seen in figure 1A, has a double-undercut section with first wings 19 and second wings 7.

The first wings 19 of the profiles are intended to directly support the edges of the strip 3 and the second wings 7 are intended to support the loads due to transit on the trench duct.

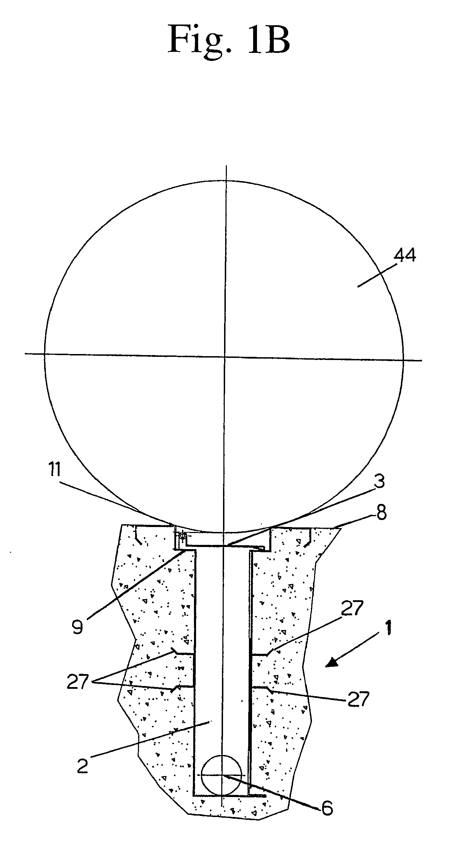

Indeed, the wings 7 comprise the portions of the transit plane or walkway 8 close to the outer edges 11. The outer edges 11 are the ones that suffer the impact of the wheels 44 of vehicles. However, given the short distance between said two outer edges 11, the wheels of common vehicles, how ever much they are weighed down by loads, are unable to rest or in any case apply weight upon the strip of flexible material 3, which thus remains protected, as clearly shown in figure 1B.

The walls 5 of the trench, on the other hand, act as an abutment for possible lateral guide wheels of the trolley and to guide the cable in the trench duct.

For this purpose the walls 5 and the base 4 are coated with steel plate.

In the embodiment shown in figures 1A, 1B the steel coating of the walls 5 and of the base 4 is made integrally with the protective and support portions 60, although it can be made in two or more parts or be left out, as shall be seen in greater detail hereafter.

The walls 5 coated in steel of said trench comprise elements 27 for anchoring to the ground, arranged at different heights of the trench duct 1.

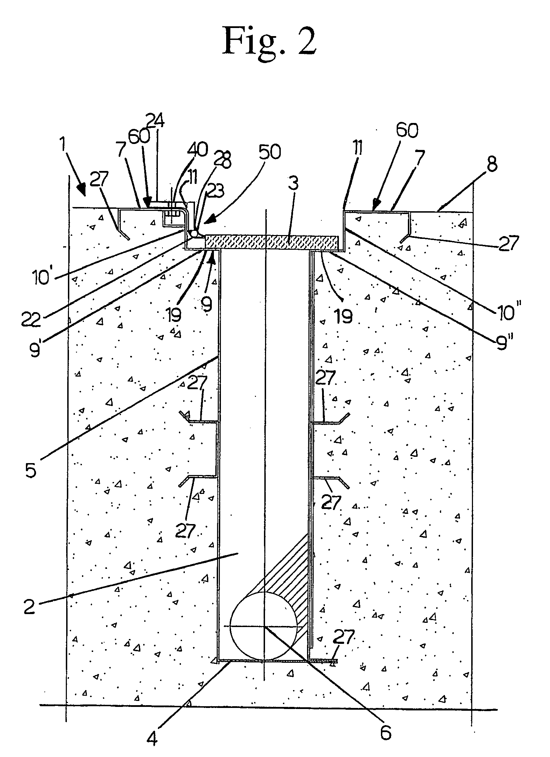

Figure 2 represents an alternative embodiment of the present invention totally similar to the previous one apart from the fact that the strip 3 is made with a different material and has different firm attachment means 50.

The strip 3 of flexible material, in this case, instead of being made from steel comprises rubber and reinforcement cloth.

In particular, the strip 3 of flexible material is made from a multi-layer material comprising rubber and reinforcement cloth.

In the present embodiment, the firm attachment means 50 have at least one tab 22 made from reinforcement cloth projecting from one of the longitudinal sides of the strip 3, at least one rod 28, firmly attached to the trench duct, and known fastening means 40, such as screws or rivets, suitable for fixing the tab 22 to the walkway 8.

The rod 28 is arranged above the tab 22 so as to determine its curvature.

The tab 22 is thus made up of at least one of the reinforcement cloths of the rubber itself.

Another reinforcement cloth can possibly be used as protection against dirt.

In other words the firm attachment means 50 comprise at least a second tab 23 made from reinforcement cloth projecting from a longitudinal side of the strip 3 and suitable for being arranged above the rod 28 to avoid the entry of dust and dirt, as shown in figure 2.

The trench duct of the present embodiment also has a covering and protection element 24 for the tab 22.

The element 24 covers the tab in the area of maximum stress of the walkway 8 in other words at one of the edges of the trench and avoids the possible damaging of the tab 22.

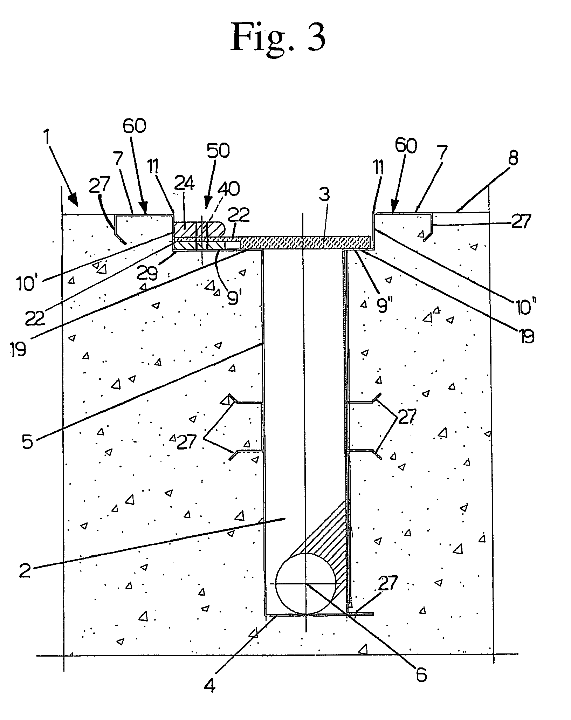

Figure 3 shows a further embodiment of the present invention totally similar to the previous one apart from the fact that it has different firm attachment means 50.

The firm attachment means 50 of the present embodiment, in addition to the tab 22 projecting with respect to a side of the strip 3 like in the embodiment of figure 2, comprise fastening means 40, such as screws or rivets, to fix the tab 22 to the surface 9'.

In this case, the covering and protection element 24 covers the tab at the surface 9' so as to avoid the possible damaging of the tab 22 itself.

Under the tab an element is foreseen of a thickness suitable for suitably distancing the tab from the surface 9'.

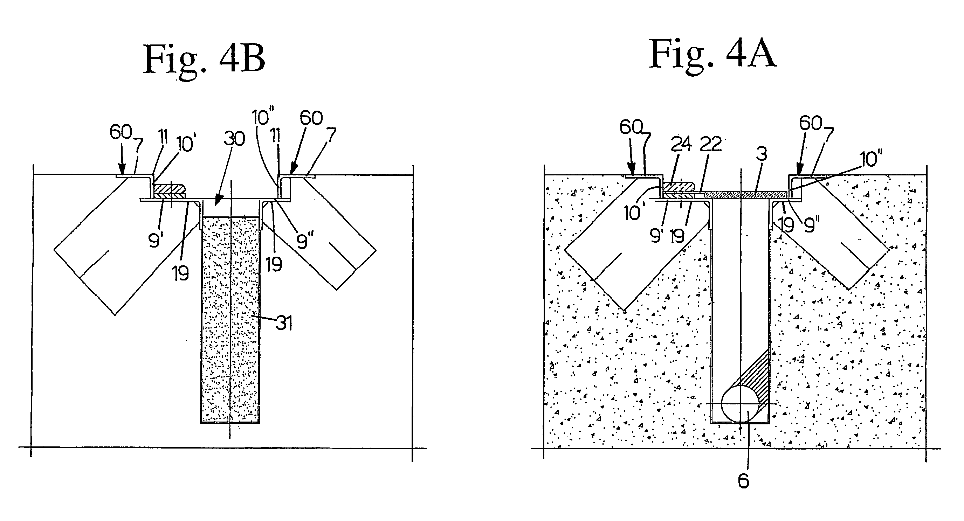

Figure 4A depicts a variant of the trench duct 1 according to the present invention.

In detail, the protective and support portion 60 is represented, not by a sheet of steel like in the previous cases, but by shaped irons of a certain thickness arranged at each top edge of the trench duct 1.

The irons are shaped to adapt to the surfaces 9', 9'', 10', 10'', to the top end portions of the walls 5 and to the portions of walkway directly adjacent to the edges 11 of the trench 2.

Each steel iron, as can be seen in figure 4A has a double-undercut section with first wings 19 and second wings 7.

The first wings 19 of the profiles are intended to directly support the edges of the strip 3 and the second wings 7 are intended to support the loads due to transit on the trench duct.

In this case, the trench duct 1 does not have a coating of the walls 5 and of the base 4 made from steel plate, but is directly made from cement.

For this purpose, prior to installation it is supplied, as indicated in figure 4B, equipped with cross members 30 (which will be eliminated after assembly) and with a polystyrene parallelepiped 31 (or similar) that is used for the casting of the cement and is eliminated after casting itself.

Figure 4A shows the trench duct of figure 4B after installation, in other words after casting has occurred. According to the present embodiment there can be some bands suitable for holding the parallelepiped 31 united with the irons.

Although it has a different construction, the trench duct of figure 4A has the same functions as the trench duct of figures 1A, 2 and 3.

Of course, although for the sake of simplicity of description just the embodiment with the rubber strip and reinforcement band of figure 3 has been described, it should be understood that the solution of producing the trench duct without walls 5 of the trench and base 4 coated by sheet metal can also be applied to the embodiments of figure 1A and 2.

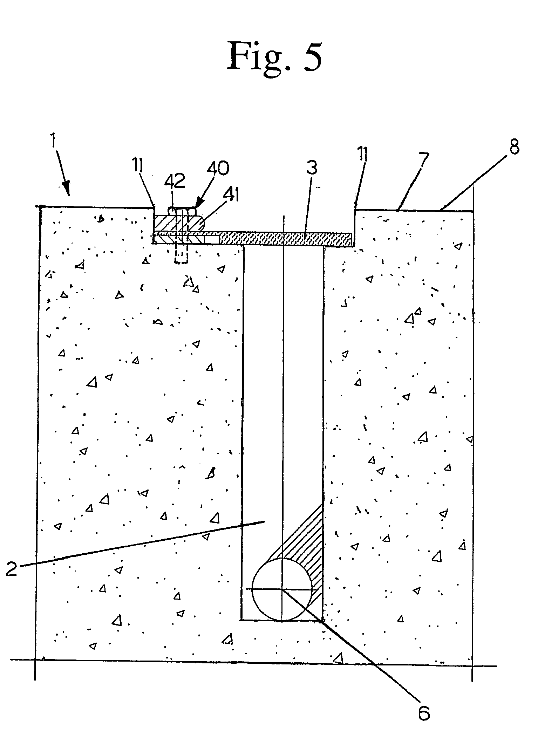

Figure 5 shows a further embodiment of the present invention totally similar to that of figure 3 apart from the fact that the trench duct 1 does not have sheet metal coating for the walls 5 and the base 4 of the trench 2 as well as the protective and support portions 60.

In this case, the strip of flexible material 3 is firmly attached directly to the cement that makes the trench 2 through a tie rod 41 and a bolt 42 that represent the attachment means 40.

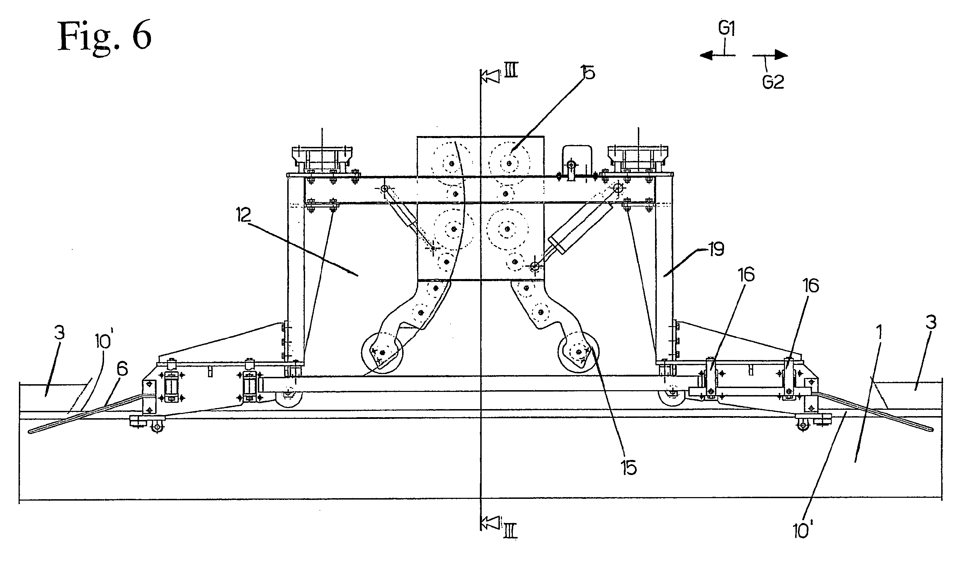

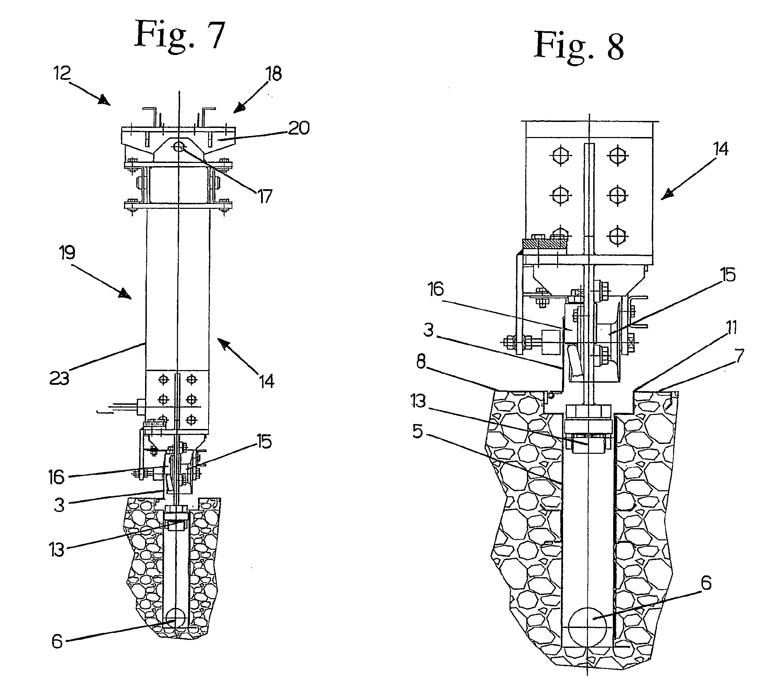

Figs. 6, 7 and 8 illustrate a cable-guide trolley for laying a cable in the trench duct according to the present invention.

The cable-guide trolley 12 substantially comprises a first element 18 and a second element 19. The first element 18 comprises a first end 20 that is solidly connected to the mobile means.

The second element 19 is connected to the first element by suitable hinges 17 that allow the trolley to follow the lateral variations of the trolley with respect to the trench duct. It is symmetrical with respect to the axis III-III of figure 6.

The second element 19 supports the cable-guide rollers 15, the strip-guide rollers 16 and a possible guide means.

The guide means, advantageously according to the present embodiment, is represented by a guide wheel 13.

The guide wheel 13 engages the walls 5 of each trench duct 1, in this way constituting guide means of the cable-guide trolley 12.

Alternatively, instead of the guide wheel 13, a sliding block could be foreseen as guide means without departing from the scope of protection of the present invention.

The cable-guide rollers 15, as shown in figure 5, are arranged according to a curved trajectory, which guides the cable forcing it to flex by an amount that tends to be small. The symmetricity with respect to the axis III-III of the second element 19 allows the cable-guide trolley 12 to operate in both directions indicated by the arrows "G1", "G2" of fig. 5.

During the sliding of the mobile means according to the arrows "G1", "G2", the guide wheels 13 guide the cable-guide trolley 12 with respect to the trench duct 1.

The cable 6 slides on the cable-guide rollers 15; at the same time the strip-guide rollers 16 lift the strip 3 of flexible material and lift it rotating it from the trench 2 at the point in which the cable juts out from or penetrates the trench itself, and lays it back down on the trench 2 when said point has been passed.

After lifting through rotation of the strip 3, the material that has accidentally been deposited on top of said strip (be it gravel, rubbish or other), is automatically discharged onto the transit plane 8 without it being able to penetrate into the trench 2 below.

In the example case, the cable 6 is electric and the trolley 12 is of the type normally associated with port cranes. However, this does not rule out the possibility that the cable can be of a different type, for example pneumatic or hydraulic, intended to feed a vehicle that is not necessarily a port crane.

The trench duct according to the present invention is also particularly well suited for housing rigid electrical contact lines without its structure having to be substantially changed.

From the description that has been made the characteristics of the trench duct object of the present invention are clear, just as the relative advantages are also clear, including the fact that the strip of flexible material (sheet of rubber or steel, etc.) that extends for the entire length of the trench prevents the penetration of foreign bodies at any point of the trench.

The strip of flexible material is a simple solution, at a low cost and does not limit the speed of movement of the cable-guide trolley.

When heavy vehicles cut across the trench duct, their wheels apply weight on the edges of the trench without involving the strip of flexible material that therefore is not touched at all. The fact that the strip of flexible material is spared from mechanical stresses (squashing and twisting) due to the (heavy) vehicles that transit over it allows the resistant sections of the strip to be reduced to the great advantage of the flexibility thereof and therefore of the ease with which the cable-guide trolley can operate on it opening and closing it.

## Claims

1. Trench duct (1) for housing at least one cable (6) under the transit plane comprising a trench (2) comprising two walls (5) and a base (4) and closed on top by a strip (3) of flexible material, said strip (3) of flexible material lies parallel and below to said transit plane (8) on a support plane (9) parallel to said transit plane (8), arranged at a lower height than said plane (8) and in that said strip (3) comprises firm attachment means (50) to said trench (2), said support plane (9) comprises a first pair of opposite coplanar support surfaces (9', 9") parallel to said transit plane (8) and arranged below it (8), on which the opposite longitudinal edges of said strip (3) of flexible material are rested by gravity, said trench (2) comprises a second pair of support portions (10', 10") perpendicular to said first surfaces (9', 9") extending more than said strip (3) from said first surfaces (9', 9") until to said plane (8) with outer edges (11) and constituting lateral containment edges of said strip (3), **characterised in that** the distance between said outer edges (11) is short, such that the wheels of vehicles crossing the duct are unable to rest on or in any case apply weight upon the strip (3).

2. Trench duct (1) according to claim 1, **characterised in that** said strip (3) extends for the length of the trench (2).

3. Trench duct (1) according to claim 1, **characterised in that** said strip (3) of flexible material is made from steel.

4. Trench duct (1) according to claim 1, **characterised in that** said strip (3) of flexible material comprises rubber and at least one reinforcing cloth.

5. Trench duct (1) according to claim 1, **characterised in that** said firm attachment means (50) comprise hinge elements suitable for firmly attaching said strip (3) of flexible material so that it can rotate with respect to one side.

6. Trench duct (1) according to claim 4, **characterised in that** said firm attachment means (50) comprise at least one tab (22) comprising at least one reinforcing cloth projecting from a longitudinal side of said strip (3), at least one rod (28), firmly attached to said trench duct (1) above said tab (22), and attachment means (40).

7. Trench duct (1) according to claim 6, **characterised in that** said attachment means (40) comprise screws and/or rivets suitable for firmly attaching said projecting tab (22) to said trench duct (1).

8. Trench duct (1) according to claim 6, **characterised in that** it comprises a covering and protection element (24) for said tab (22).

9. Trench duct (1) according to claim 6, **characterised in that** said firm attachment means (50) comprise at least one second tab (23) comprising reinforcement cloth projecting from a longitudinal side of said strip (3) suitable for being arranged above said rod (28) to avoid the entry of dust or dirt.

10. Trench duct (1) according to claim 1, **characterised in that** it comprises at least one protective and support portion (60) arranged at the top edge of said trench duct (1).

11. Trench duct (1) according to claim 1, **characterised in that** the walls (5) and the base (4) of said trench (2) are coated with steel plate.

12. Trench duct (1) according to claim 11, **characterised in that** the walls coated with steel plate of said trench comprise elements (27) for anchoring to the ground, arranged at different heights of said trench duct (1).

## Patentansprüche

1. Bodenkanal (1) zur Aufnahme von mindestens einem Kabel (6) unter der Durchfahrtsebene umfassend einen Graben (2), umfassend zwei Wände (5) und einen Boden (4) und geschlossen auf der Oberseite durch einen Streifen (3) aus flexiblem Material, wobei der Streifen (3) aus flexiblem Material parallel und unterhalb der Durchfahrtsebene (8) auf einer Auflageebene (9) liegt, die parallel zur Durchfahrtsebene (8) auf einer geringeren Höhe als die Ebene (8) angeordnet ist und wobei der Streifen (3) stabile Befestigungsmittel (50) mit dem Graben (2) umfasst, wobei die Auflageebene (9) ein erste Paar gegenüberliegender, koplanerer Auflageflächen (9', 9") parallel zur Durchfahrtsebene (8) und unterhalb derselben (8) umfasst, auf der die entgegengesetzten Längskanten des Streifens (3) aus flexiblem Material durch Schwerkraft gehalten werden, wobei der Graben (2) ein zweites Paar Stützabschnitte (10', 10") senkrecht zu den ersten Flächen (9', 9") umfasst, die sich länger als der Streifen (3) von den ersten Flächen (9', 9") bis zur Ebene (8) mit äußeren Kanten (11) erstrecken und seitliche Randbegrenzungen des Streifens (3) bilden, **dadurch gekennzeichnet, dass** der Abstand zwischen den äußeren Kanten (11) so kurz ist, dass die Räder des den Kanal überquerenden Fahrzeugs nicht in der Lage sind, darauf zu ruhen bzw. Gewicht auf den Streifen (3) aufzubringen.

2. Bodenkanal (1) nach Anspruch 1, **dadurch gekennzeichnet, dass** der Streifen (3) sich über die Länge des Grabens (2) erstreckt.

3. Bodenkanal (1) nach Anspruch 1, **dadurch gekennzeichnet, dass** der Streifen (3) aus flexiblem Material aus Stahl hergestellt ist.

4. Bodenkanal (1) nach Anspruch 1, **dadurch gekennzeichnet, dass** der Streifen (3) aus flexiblem Material Gummi und mindestens ein Verstärkungsgewebe umfasst.

5. Bodenkanal (1) nach Anspruch 1, **dadurch gekennzeichnet, dass** die stabilen Befestigungsmittel (50) Scharnierelemente umfassen, die dazu geeignet sind, den Streifen (3) aus flexiblem Material stabil zu befestigen, so dass er bezüglich einer Seite verdrehbar ist.

6. Bodenkanal (1) nach Anspruch 4, **dadurch gekennzeichnet, dass** die stabilen Befestigungsmittel (50) mindestens eine Lasche (22) umfassen, die mindestens ein auf einer Längsseite des Streifens (3) überstehendes Verstärkungsgewebe, mindestens eine stabil an dem Bodenkanal (1) über der Lasche (22) befestigte Stange (28) und Befestigungsmittel (40) umfasst.

7. Bodenkanal (1) nach Anspruch 6, **dadurch gekennzeichnet, dass** die Befestigungsmittel (40) Schrauben und/oder Nieten umfassen, die dazu geeignet sind, die überstehende Lasche (22) an dem Bodenkanal (1) stabil zu befestigen.

8. Bodenkanal (1) nach Anspruch 6, **dadurch gekennzeichnet, dass** er ein Abdeck- und Schutzelement (24) für die Lasche (22) umfasst.

9. Bodenkanal (1) nach Anspruch 6, **dadurch gekennzeichnet, dass** die stabilen Befestigungsmittel (50) mindestens eine zweite Lasche (23), umfassend Verstärkungsgewebe umfasst, das aus einer Längsseite des Streifens (3) übersteht und dazu geeignet ist, über der Stange (28) angeordnet zu werden, um das Eindringen von Staub oder Schmutz zu vermeiden.

10. Bodenkanal (1) nach Anspruch 1, **dadurch gekennzeichnet, dass** er mindestens einen Schutz- und Stützabschnitt (60) umfasst, der an der Oberkante des Bodenkanals (1) angeordnet ist.

11. Bodenkanal (1) nach Anspruch 1, **dadurch gekennzeichnet, dass** die Wände (5) und der Boden (4) des Grabens (2) mit Stahlblech verkleidet sind.

12. Bodenkanal (1) nach Anspruch 11, **dadurch gekennzeichnet, dass** die mit Stahlblech verkleideten Wände des Grabens Elemente (27) zur Verankerung im Boden umfassen, die auf einer anderen Höhe als der Bodenkanal (1) angeordnet sind.

## Revendications

1. Tranchée (1) pour loger au moins un câble (6) sous le plan de transport comprenant une tranchée (2) comprenant deux parois (5) et une base (4) et fermée sur le dessus par une bande (3) de matériau souple, ladite bande (3) de matériau souple s'étire en parallèle et en dessous dudit plan de transport (8) sur un plan de support (9) parallèle audit plan de transport (8), disposée à une hauteur inférieure audit plan (8) et ladite bande (3) comprend des moyens de fixation solide (50) à ladite tranchée (2), ledit plan de support (9) comprend une première paire de surfaces de support coplanaires opposées (9', 9") parallèles audit plan de transport (8) et disposées en dessous de celui-ci (8), sur lesquelles les bords longitudinaux opposés de ladite bande (3) de matériau souple reposent par gravité, ladite tranchée (2) comprend une seconde paire de parties de support (10', 10") perpendiculaires auxdites premières surfaces (9', 9") s'étendant plus que ladite bande (3) à partir desdites premières surfaces (9', 9") jusqu'audit plan (8) avec des bords extérieurs (11) et constituant des bords latéraux de confinement de ladite bande (3), **caractérisée en ce que** la distance entre lesdits bords extérieurs (11) est courte, de telle sorte que les roues de véhicules traversant la canalisation ne sont pas en mesure de reposer, ou en tout cas d'exercer un poids, sur la bande (3).

2. Tranchée (1) selon la revendication 1, **caractérisée en ce que** ladite bande (3) s'étend sur la longueur de la tranchée (2).

3. Tranchée (1) selon la revendication 1, **caractérisée en ce que** ladite bande (3) de matériau souple est en acier.

4. Tranchée (1) selon la revendication 1, **caractérisée en ce que** ladite bande (3) de matériau souple comprend du caoutchouc et au moins une toile de renfort.

5. Tranchée (1) selon la revendication 1, **caractérisée en ce que** lesdits moyens de fixation solide (50) comprennent des éléments de charnière adaptés pour fixer solidement ladite bande (3) de matériau souple de sorte qu'elle puisse tourner par rapport à un côté.

6. Tranchée (1) selon la revendication 4, **caractérisée en ce que** lesdits moyens de fixation solide (50) comprennent au moins un onglet (22) comprenant au moins une toile de renfort dépassant d'un côté longitudinal de ladite bande (3), au moins une tige (28), solidement fixée à ladite tranchée (1) au-dessus dudit onglet (22), et des moyens de fixation (40).

7. Tranchée (1) selon la revendication 6, **caractérisée en ce que** lesdits moyens de fixation (40) comprennent des vis et/ou rivets adaptés pour fixer solidement ledit onglet dépassant (22) à ladite tranchée (1).

8. Tranchée (1) selon la revendication 6, **caractérisée en ce qu'**elle comprend un élément de couverture et protection (24) pour ledit onglet (22).

9. Tranchée (1) selon la revendication 6, **caractérisée en ce que** lesdits moyens de fixation solide (50) comprennent au moins un second onglet (23) comprenant une toile de renfort dépassant d'un côté longitudinal de ladite bande (3), adapté pour être disposé au-dessus de ladite tige (28) pour éviter la pénétration de poussière ou de saleté.

10. Tranchée (1) selon la revendication 1, **caractérisée en ce qu'**elle comprend au moins une partie de protection et de support (60) disposée en correspondance du bord supérieur de ladite tranchée (1).

11. Tranchée (1) selon la revendication 1, **caractérisée en ce que** les parois (5) et la base (4) de ladite tranchée (2) sont revêtues d'une plaque d'acier.

12. Tranchée (1) selon la revendication 11, **caractérisée en ce que** les parois revêtues d'une plaque d'acier de ladite tranchée comprennent des éléments (27) pour s'ancrer au sol, disposés à des hauteurs différentes de ladite tranchée (1).
